# EUROPEAN PATENT APPLICATION

(11) **EP 4 549 730 A1**
(43) Date of publication of application: **07.05.2025**
(21) Application number: 23830415.8
(22) Date of filing: 29.06.2023
(51) Int. Cl.: F03D 13/20, F03D 13/10, F03D 13/40

(54) **TOWER SHEET ASSEMBLY, TOWER SECTION, AND TOWER TRANSPORTATION AND ASSEMBLY METHOD**

(30) Priority: 30.06.2022 CN 202210767352
(71) Applicant: Beijing Goldwind Science & Creation Windpower Equipment Co. Ltd., Beijing 100176 (CN)
(72) Inventor: ZHANG, Ke, Beijing 100176 (CN); JI, Gela, Beijing 100176 (CN); CAO, Xuemin, Beijing 100176 (CN)
(74) Representative: Hoffmann Eitle
(86) International application number: PCT/CN2023/103897
(87) International publication number: WO 2024/002247

(57) **Abstract**

The present disclosure relates to a tower sheet assembly, a tower section, and a tower transportation and assembly method. The tower sheet assembly comprises a tower sheet, and a foldable platform, which is arranged on an inner side of the tower sheet. The foldable platform comprises a platform main body and a support member. The support member comprises a support seat, wherein a first end of the support seat is fixed to an inner wall of the tower sheet, and a second end of the support seat is hinged to the platform main body at a first hinge point, such that the platform main body can pivot, around the second end of the support seat, between a folded position and an unfolded position.

## Description

### FIELD

The present application relates to the technical field of wind power, and in particular to the field of a segmented tower or mast for a wind turbine generator system.

### BACKGROUND

With the development of the wind power industry, the diameter of the tower has also increased in consideration of the load-bearing capacity and safety of the tower for the wind turbine. In this case, a segmented tower or mast structure is beneficial. A conventional maintenance platform for the segmented tower or mast is a one-piece annular or circular platform, which is mounted inside the tower and is substantially perpendicular to a longitudinal central axis of the tower for placement of electrical or other components required by the wind turbine generator system or for use by maintenance personnel.

However, such an annular or circular platform usually needs to be assembled to the tower at the project construction site. For the segmented tower or mast, for example, a first tower sheet may be mounted firstly (for example, placed horizontally), and then the monolithic annular or circular platform may be mounted, and then the other tower sheet(s) (for example, the second tower sheet, the third tower sheet, etc.) may be mounted. In this process, since the monolithic platform is mounted prior to the second tower sheet, the third tower sheet, etc., the monolithic platform may affect assembling of the tower sheets during the installation of the second tower sheet, the third tower sheet, etc., thus making the installation more difficult. Furthermore, if the monolithic platform is mounted after all or most of the tower sheets have been spliced or assembled together, the tower sheets placed horizontally may not be perfectly circular (for example, elliptical) due to the self-weight of the tower sheets, in which case it is difficult to mount the monolithic annular or circular platform.

Furthermore, the installation of monolithic annular or circular platform at the project construction site often requires the assistance of a crane. Therefore, the installation of the monolithic platform at the construction site involves heavy workload, greater installation difficulty, poor installation accuracy and longer on-site working time, which is not expected especially for offshore unit construction.

### SUMMARY

Therefore, an object of the present application is at least to reduce the time, workload, difficulty, etc. of the on-site installation of the tower platform, to reduce the influence of the platform on the splicing or assembling of the tower or mast, to facilitate the transportation of the tower platform with the tower sheets, or to reduce the space and difficulty of the transportation or storage.

According to an aspect of the present application, a tower sheet assembly is provided, and the tower sheet assembly includes a tower sheet and a foldable platform provided on an inner side of the tower sheet. The foldable platform includes a platform main body and a support member, and the support member includes a support seat. A first end of the support seat is fixed to an inner wall of the tower sheet, and a second end of the support seat is hinged to the platform main body at a first hinge point, so that the platform main body can pivot around the second end of the support seat between a folded position and an unfolded position. In the folded position, the platform main body is folded proximate to the inner wall of the tower sheet; and in the unfolded position, the platform main body is supported on the support seat and is substantially perpendicular to a central axis of the tower.

According to another aspect of the present application, there is provided a tower section including more than two tower sheet assemblies as described above, which are spliced together in a circumferential direction.

According to yet another aspect of the present application, there is provided a method for transporting and assembling a tower, and the method includes: during the storage or transportation of the tower, placing the foldable platforms in multiple tower sheet assemblies as described above in a folded position so that each platform main body is folded or stowed proximate to the inner wall of the tower sheet; and stacking the individual tower sheet assemblies in a radial direction of the tower sheets, so that the foldable platforms are disposed between the two stacked tower sheets.

### BRIEF DESCRIPTION OF THE DRAWINGS

FIG. 1 shows a schematic perspective view of a segmented tower section according to an embodiment of the present application;
FIG. 2 shows a schematic plan view of the segmented tower section according to the embodiment of the present application;
FIG. 3 shows a schematic plan view of two different tower sheet assemblies according to the embodiments of the present application;
FIGS. 4 and 5 show schematic perspective views of a foldable platform in an unfolded position according to an embodiment of the present application, respectively;
FIG. 6 shows a schematic perspective view of the foldable platform in a folded position according to the embodiment of the present application;
FIGS. 7 and 8 show schematic perspective views of another foldable platform in an unfolded position according to an embodiment of the present application, respectively;
FIG. 9 shows a schematic perspective view of the another foldable platform in a folded position according to the embodiment of the present application;
FIG. 10 shows a schematic diagram of the folding function of the foldable platform realized by a crank-slider mechanism according to an embodiment of the present application; and
FIG. 11 shows a schematic view of multiple tower sheet assemblies stacked together in a radial direction of the tower sheets according to an embodiment of the present application.

Description of reference numerals:

| | | | | | |
|---|---|---|---|---|---|
| 1. | tower sheet; | 2. | platform main body; | 10. | foldable platform; |
| 20. | support member; | 31. | support seat; | 32. | hinge seat; |
| 21. | first end of the support seat; | 22. | first end of the hinge seat; | | |
| 41. | first hinge point; | 42. | second hinge point; | 43. | third hinge point; |
| 44. | fourth hinge point; | 50. | inclined support part; | 51. | first support beam; |
| 52. | second support beam; | 55. | slider; | 27. | hole; |
| 28. | corner; | 61. | reinforcement member. | | |

### DETAILED DESCRIPTION OF THE EMBODIMENTS

Features in various aspects and exemplary embodiments of the present application will be described in detail below. In the following detailed description, numerous specific details are set forth in order to provide a thorough understanding of the present application. However, it will be apparent to those skilled in the art that the present application may be implemented without some of these specific details. The following description of the embodiments is merely to provide a better understanding of the present application by showing examples of the present application. In the accompanying drawings and the following description, at least some of the well-known structures and techniques are not shown in order to avoid unnecessarily obscuring the present application. Moreover, the dimensions of some structures may be exaggerated for clarity. Furthermore, the features, structures or characteristics described below may be combined in one or more embodiments in any suitable manner.

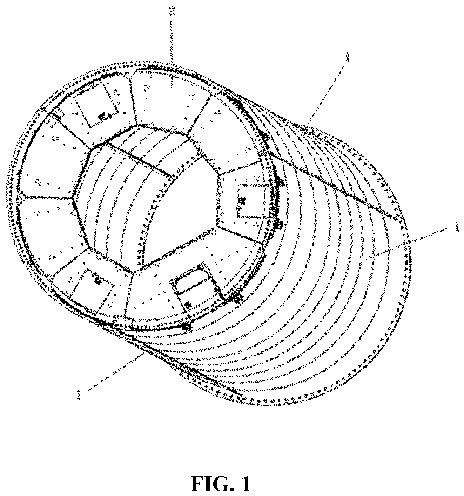

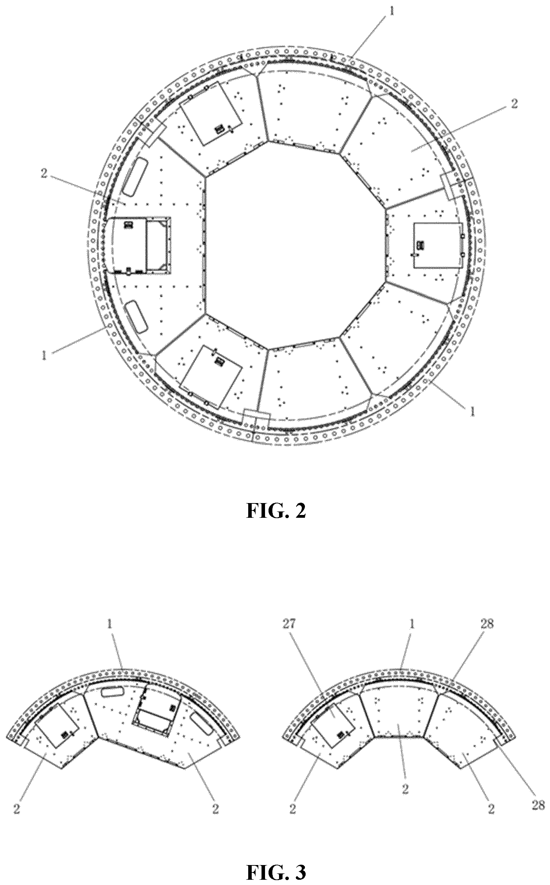

FIGS. 1 and 2 respectively show a schematic perspective view and a schematic plan view of a segmented tower section according to an embodiment of the present application.

FIG. 1 shows a segmented tower or mast for a wind turbine generator system, and the segmented tower or mast may be a part of a whole tower or mast, i.e. a tower section. The tower section may include more than two tower sheets 1 spliced together in a circumferential direction. The exemplary embodiment in FIGS. 1 and 2 shows three tower sheets 1, and each of the tower sheets 1 is an arcuate tower sheet with a central angle of 120° in the cross-section. For a tower section with a polygonal cross-section, the cross-section of each of the tower sheets is formed of angled lines or a straight line, so that a complete tower section may be formed by successively connecting the ends of the multiple tower sheets 1 in a longitudinal direction, which may be carried out by means of a flange connection, welding, etc.

According to an exemplary embodiment of the present application, a segmented platform (more particularly, a foldable segmented folding platform, which will be described in more detail later) is applied to a tower. For example, each tower sheet may correspond to at least one platform main body 2. As shown in FIG. 3, one tower sheet 1 may be provided with two or three platform main bodies 2, but it is not limited thereto. Different numbers or sizes of platform main bodies 2 may be designed based on a diameter of the tower, a sector angle of the tower sheet, the functions performed by the platform main bodies, etc.

In case of the platform main bodies 2 of all of the tower sheet assemblies being in the unfolded position, all the platform main bodies 2 form an annular or circular platform or a polygonal platform which is substantially perpendicular to a central axis of the tower.

In the present application, it is proposed to apply the segmented platform to the segmented tower and attach the segmented platform to the tower sheet to form a tower sheet assembly, and it is proposed to design the segmented platform to be foldable with respect to the tower sheet.

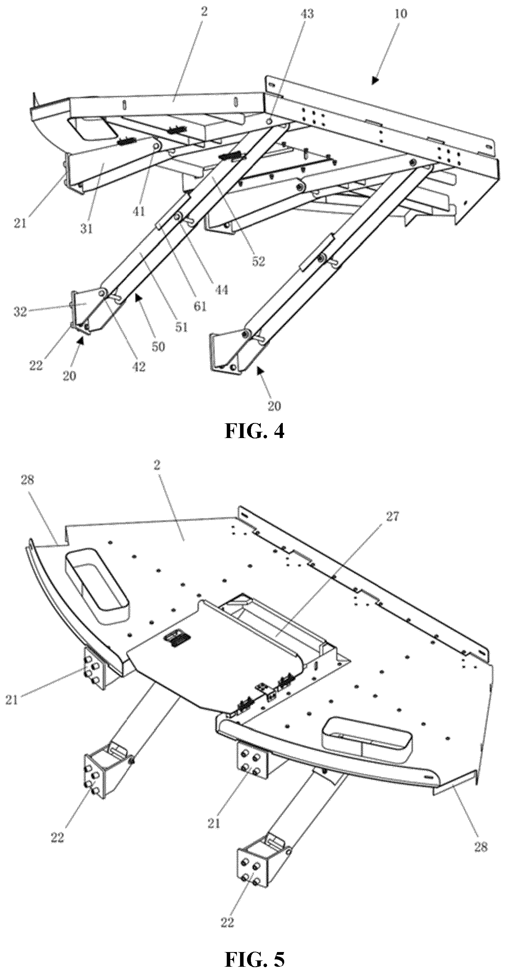

Specifically, as shown in FIGS. 2 and 3, the tower sheet assembly includes a sector-shaped tower sheet 1 and a foldable platform 10 provided on an inner side of the tower sheet 1. The foldable platform 10 includes a platform main body 2 and a support member 20. Each tower sheet 1 may be provided with one or more foldable platforms 10, and each foldable platform 10 may include one or more support members 20. As shown in FIG. 4, each foldable platform 10 includes two support members 20, but not limited thereto.

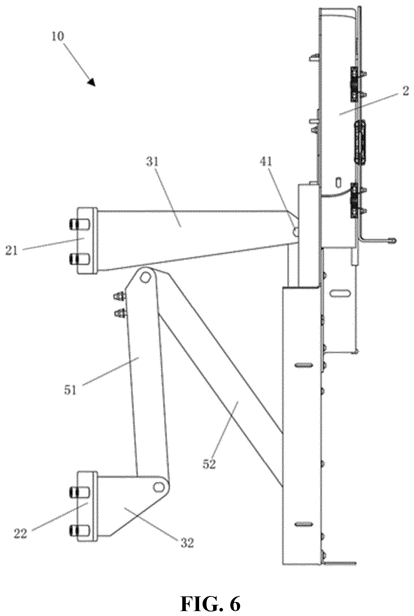

As shown in FIG. 4, the support member 20 may include a support seat 31 extending in a radial direction of the tower. A first end 21 of the supported seat 31 may be fixed to an inner wall of the tower sheet 1, and a second end of the support seat 31 may be hinged to the platform main body 2 at a first hinge point 41, so that the platform main body 2 can pivot around the second end of the support seat 31 between a folded position and an unfolded position. In the folded position (as shown in FIG. 6), the platform main body 2 may be retracted close to the inner wall of the tower sheet, reducing space occupation. In the unfolded position (as shown in FIGS. 4 and 5), the platform main body 2 may be supported on the support seat 31 and be substantially perpendicular to the central axis (not shown) of the tower, that is, the platform main body 2 may be substantially horizontal in case of the tower being upright.

Here, the support seat 31 may have a specific rigidity to provide a sufficient support force in case of the platform main body 2 being unfolded and supported on the support seat 31. The support seat 31 may be of an elongate rod structure or two steel plates fixed on the inner wall of the tower sheet 1. At the first hinge point 41, the support seat 31 may be hinged to a bottom of the platform main body 2 via a hinge member such as a rotary shaft or a pin, for example, hinged to a rib plate protruding from the bottom surface of the platform main body 2, which is not limited herein.

Furthermore, as shown in FIG. 4, the support member 20 may further include an inclined support part 50 provided below the support seat 31. A first end of the inclined support part 50 may be hinged at a second hinge point 42 to a hinge seat 32 fixed to the inner wall of the tower sheet 1, and a second end of the inclined support part 50 may be hinged to the platform main body 2 at a third hinge point 43. Here, on the one hand, the inclined support part 50 may be combined with the above-mentioned structure for folding the platform main body 2 such that the platform main body 2 may be folded or stowed to be close to the inner wall of the tower sheet 1; and on the other hand, the inclined support part 50 may serve as an oblique side for a triangular support of the platform main body 2 in case of the platform main body 2 being in the unfolded position, thereby providing a stable support for the platform main body 2. As will be described below, the inclined support part 50 may be implemented in various structural forms.

As shown in FIGS. 4 to 6, the support member 20 or the inclined support part 50 may include a first support beam 51 and a second support beam 52. A first end of the first support beam 51 may be hinged to the hinge seat 32 at the second hinge point 42; a first end of the second support beam 52 may be hinged to the platform main body 2 at the third hinge point 43; and a second end of the first support beam 51 and a second end of the second support beam 52 may be hinged to each other at a fourth hinge point 44.

In case of the platform main body 2 being folded, the first hinge point 41 and the second hinge point 42 remain stationary, whereas the third hinge point 43 and the fourth hinge point 4 travel along a specific arc, with the first support beam 51 and the second support beam 52 being angled, until the platform main body 2 is folded to the folded position as shown in FIG. 6.

Here, the hinge seat 32 is provided below the support seat 31, and the support seat 31 may have a radial length greater than that of the hinge seat 32. In this case, a space for storing the support beams may be left between the tower sheet 1 and the platform main body 2 in the folded position. Furthermore, during transportation or storage, a supporter may be placed in the space to prevent a hard collision between the platform main body 2 and the tower sheet 1.

Alternatively, the support member 20 or the inclined support part 50 may include only a single support beam. A first end of the single support beam may be hinged to the hinge seat 32, and a second end of the single support beam may be detachably connected to the platform main body 2. In this case, during transportation or storage, i.e., in the folded position of the platform main body 2, the second end of the single support beam may be detached and separated from the platform main body 2. The second end of the single support beam may again be attached to the platform main body 2 by means of a fastener after the platform main body 2 has been unfolded.

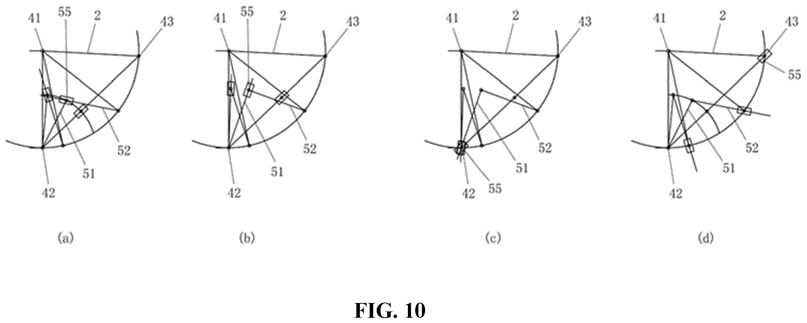

Alternatively, as shown in FIG. 10 (shown schematically only), the support member 20 or the inclined support part 50 may include a first support beam 51 and a second support beam 52. A first end of the first support beam 51 may be hinged to the hinge seat 32 at the second hinge point 42, and a first end of the second support beam 52 may be hinged to the platform main body 2 at the third hinge point 43. A slider 55 is hinged to one of a second end of the first support beam 51 and a second end of the second support beam 52, and the other of the second end of the first support beam 51 and the second end of the second support beam 52 is slidable in the slider 55, as shown in (a) and (b) of FIG. 10.

Alternatively, the slider 55 may also be hinged to the inner wall of the tower sheet (more specifically, to the hinge seat 32) or to the platform main body 2, as shown in (c) and (d) of FIG. 10. That is, the support member 20 may include a slider 55 hinged to one of the hinge seat 32 and the platform main body 2, in which case, a first end of the support beam of the support member 20 may slide in the slider 55, and a second end of the support beam may be hinged to the other of the hinge seat 32 and the platform main body 2. In this case, the support beam may be a single support beam or two or more support beams hinged to each other. Two support beams hinged to each other are only shown, but a single support beam is also feasible.

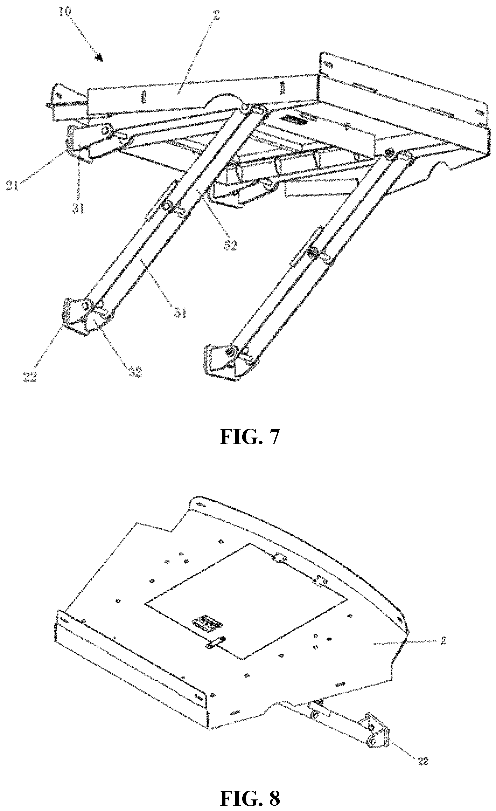

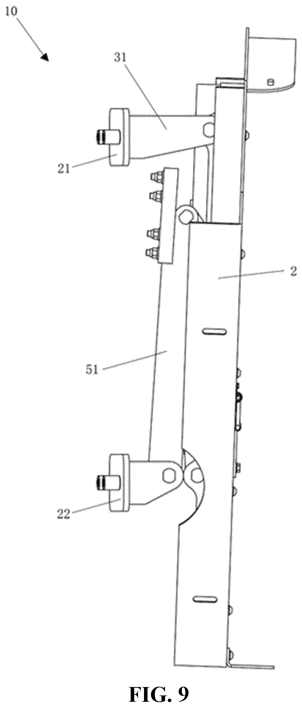

Furthermore, FIGS. 7 to 9 show another foldable platform, which is different from the foldable platform described above with reference to FIGS. 4 to 6 in that the size (a sector angle) of the platform main body 2 is different, and the support seat 31 used accordingly has a different length. In other words, the support seat 31 has a length that may vary with the magnitude of a sector angle of the platform main body 2. For example, for the platform main body 2 with a larger sector angle, the support seat 31 may have a longer length, whereas for the platform main body 2 with a smaller sector angle, the support seat 31 may have a shorter length, so as to ensure that the platform main body 2 does not interfere with the tower sheet 1 during the folding of the platform main body. Furthermore, as shown in FIG. 5, the platform main body 2 may be provided with a hole27 penetrating through the thickness of the platform main body 2. For example, the hole27 may be used for passage of a tower ladder. In the case of the platform main body 2 with the hole27, the support member 20 needs to be provided at the outer side of the hole27 so as not to interfere with the hole27.

Furthermore, unlike the traditional circular or annular monolithic platform, the segmented platform main body 2 is an annular sector-shaped segment. The platform main body 2 has corners 28 located between an outer circumferential edge in a radial direction and two side edges in a circumferential direction of the platform main body 2 (as shown in FIGS. 5 and 3). The corner 28 may be notched or chamfered, that is, the corner 28 is not a common sharp corner, but can have a flat surface or an inwardly concave surface, thereby reserving a space at the junction of the two platform main bodies 2. Therefore, on the one hand, it is convenient to assemble the segmented platforms and adjust the position of the platform, without the need for considering the very accurate assembly tolerance or the deformation of the tower or platform occurred during assembling. On the other hand, the space may also be used for passage of wiring within the tower, and the space may also provide a fixing or support point for the wiring passing therethrough. This is not limited in the present application. The platform main body 2 may not have the notched or chamfered shape as described above. For example, the circumferential edge of the platform main body 2 directly intersects with the radially extending side edges of the platform main body 2 at the corner 28.

In view of the tower sheet assembly as described above, the traditional circular platform may be divided into multiple small platforms, and each of the small platforms may be directly attached to the segmented tower sheet, and each of the platforms may be folded relative to the tower sheet, so that the platform may be transported with the tower sheet. Moreover, at the project construction site, the platform may simply be unfolded without the need for using a large lifting tool to mount the platform(s). furthermore, since each foldable platform has the support member, it is unnecessary to use additional fastening means to fasten the platform main body to the inner wall of the tower sheet after the platform main body has been unfolded, and it is also unnecessary to consider the influence of the installation of the platforms on the splicing or assembling of the tower sheets, thereby not only greatly reducing the construction time at the site, but also greatly reducing the installation difficulty and workload.

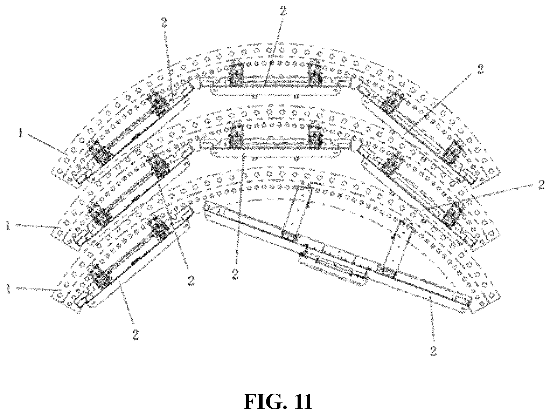

A method for transporting and assembling a tower based on the above tower sheet assembly is described below with further reference to FIG. 11.

During the storage or transportation of the tower, a foldable platform(s) 10 in each of multiple tower sheet assemblies is placed in a folded position, so that each platform main body 2 is folded close to an inner wall of the tower sheet 1, thereby reducing the space occupation of the platform main bodies and facilitating the transportation of the tower sheet assemblies. In addition, individual tower sheet assemblies may be stacked together in a radial direction of the tower sheets 1, so that each foldable platform 10 may be located between two tower sheets 1 stacked. This stacking manner is particularly beneficial for the transportation or storage of the tower and the platform, since the platform may be transported together with the tower sheet. Traditionally, since the shape of the circular or annular platform is not matched with the shape of the sector-shaped tower sheet extending longitudinally, it is difficult to stack the platform and the tower sheet together for transportation, having a large footprint; and for a tower with a large diameter, it is also difficult to transport the monolithic circular or annular platform. However, the tower sheet assembly according to the present application may effectively solve these problems. The platform main body 2 of the foldable platform occupies almost no additional space or occupies very little space, and only utilizes the space between two adjacent tower sheets 1 which are stacked together.

At the tower installation site, each platform main body 2 may be unfolded to an unfolded position before or after the individual tower sheets 1 are spliced and assembled together. After all the platform main bodies 2 have been unfolded, as shown in FIG. 2, the assembled complete platform may be an annular platform with a polygonal central portion (in this case, the platform main body 2 is an annular sector-shape segment or a truncated sector-shape segment), but it is not limited to this, and the platform main bodies 2 of other shapes may be formed according to the design. For example, the individual platform main bodies 2 may also be assembled into a circular platform, i.e. without a central opening. In this case, the platform main body 2 may be a sector-shaped segment instead of a truncated sector-shaped segment as shown above.

In this case, there is no need to use a large lifting tool, and since each support member 20 is able to provide strong and stable support for the platform main body 2, it is not necessary to fix the platform to an inner wall of the tower along an outer circumferential of the platform at the construction site, for example, by a bolt.

Optionally, after the platform main bodies 2 have been unfolded, two adjacent platform main bodies 2 may be fixedly connected together at the edges where they abut against each other in a circumferential direction (which is particularly beneficial for a foldable platform without an inclined support part), which only involves the connection between platforms, but not the connection between the platform and the inner wall of the tower, so this fixed connection is also easy to operate.

Furthermore, after the platform main body 2 has been unfolded, a reinforcement member or a locking member may be provided on the support member 20. As shown in FIG. 4, the reinforcement member 61 is engaged with both the first support beam 51 and the second support beam 52, so as to prevent the foldable platform 10 from being folded in undesired situations.

The specific embodiments of the present application have been described in detail above. Although some embodiments have been shown and described, those skilled in the art should understand that modifications and improvements may be made to these embodiments without departing from the principle and spirit of the present application, which is defined by the claims and their equivalents, and these modifications and improvements should also fall within the protection scope of the present application.

## Claims

1. A tower sheet assembly, wherein the tower sheet assembly comprises a tower sheet (1) and a foldable platform (10) provided on an inner side of the tower sheet (1), the foldable platform (10) comprises a platform main body (2) and a support member (20), the support member (20) comprises a support seat (31), a first end (21) of the support seat (31) is fixed to an inner wall of the tower sheet (1), and a second end of the support seat (31) is hinged to the platform main body (2) at a first hinge point (41), so as to enable the platform main body (2) to pivot around the second end of the support seat (31) between a folded position and an unfolded position, and
wherein in the folded position, the platform main body (2) is folded close to the inner wall of the tower sheet (1); and in the unfolded position, the platform main body (2) is supported on the support seat (31) and is substantially perpendicular to a central axis of a tower.

2. The tower sheet assembly according to claim 1, wherein the support member (20) further comprises an inclined support part (50) provided below the support seat (31), and
wherein a first end of the inclined support part (50) is hinged at a second hinge point (42) to a hinge seat (32) fixed to the inner wall of the tower sheet (1), and a second end of the inclined support part (50) is hinged to the platform main body (2) at a third hinge point (43).

3. The tower sheet assembly according to claim 2, wherein the support member (20) comprises a first support beam (51) and a second support beam (52), a first end of the first support beam (51) is hinged to the hinge seat (32) at the second hinge point (42), and a first end of the second support beam (52) is hinged to the platform main body (2) at the third hinge point (43), and a second end of the first support beam (51) and a second end of the second support beam (52) is hinged to each other at a fourth hinge point (44).

4. The tower sheet assembly according to claim 2, wherein the support member (20) comprises a single support beam, a first end of the single support beam is hinged to the hinge seat (32), a second end of the single support beam is detachably connected to the platform main body (2), and the second end of the single support beam is detached from the platform main body (2) in case of the platform main body (2) being in the folded position.

5. The tower sheet assembly according to claim 2, wherein the support member (20) comprises a first support beam (51) and a second support beam (52), a first end of the first support beam (51) is hinged to the hinge seat (32) at the second hinge point (42), and a first end of the second support beam (52) is hinged to the platform main body (2) at the third hinge point (43); and
wherein a slider (55) is hinged to one of a second end of the first support beam (51) and a second end of the second support beam (52), and the other of the second end of the first support beam (51) and the second end of the second support beam (52) is slidable in the slider (55).

6. The tower sheet assembly according to claim 2, wherein the support member (20) comprises a slider (55) hinged to one of the hinge seat (32) and the platform main body (2), and the support member (20) further comprises a support beam, wherein a first end of the support beam is slidable in the slider (55), and a second end of the support beam is hinged to the other of the hinge seat (32) and the platform main body (2).

7. The tower sheet assembly according to claim 6, wherein the support beam comprises a single support beam, or two or more support beams hinged to each other.

8. The tower sheet assembly according to claim 1, wherein the support seat (31) has a length varying with the magnitude of a sector angle of the platform main body (2).

9. The tower sheet assembly according to claim 2, wherein the hinge seat (32) is provided below the support seat (31), and the support seat (31) has a radial length greater than that of the hinge seat (32).

10. The tower sheet assembly according to claim 1, wherein the number of the foldable platforms (10) is one or more, and/or each foldable platform (10) comprises one or more support members (20).

11. The tower sheet assembly according to claim 1, wherein the platform main body (2) is an annular sector-shaped segment, and a corner (28) of the platform main body (2) located between an outer circumferential edge in a radial direction and each of two side edges in a circumferential direction of the platform main body has a flat or concave surface.

12. The tower sheet assembly according to claim 1, wherein the platform main body (2) comprises an hole (27) penetrating through the thickness of the platform main body (2), and the support member (20) is provided at an outer side of the hole(27) so as not to interfere with the hole(27).

13. The tower sheet assembly according to any one of claims 1 to 12, wherein in the unfolded position of the platform main bodies (2), two adjacent platform main bodies (2) are fixedly connected together at the edges thereof abutting against each other in a circumferential direction.

14. A tower section, wherein the tower section comprises more than two tower sheet assemblies according to any one of claims 1 to 13 spliced together in a circumferential direction.

15. The tower section according to claim 14, wherein in case of the platform main bodies (2) of all of the tower sheet assemblies being in the unfolded position, all the platform main bodies (2) form an annular or circular platform or a polygonal platform which is substantially perpendicular to the central axis of the tower.

16. A method for transporting and assembling a tower, wherein the method comprises:
during the storage or transportation of the tower, placing foldable platforms (10) in a plurality of the tower sheet assemblies according to any one of claims 1 to 13 in the folded position, so that each platform main body (2) is folded close to the inner wall of the tower sheet (1);
stacking the individual tower sheet assemblies together in a radial direction of the tower sheets (1), so that the foldable platforms (10) are located between two stacked tower sheets (1).

17. The method for transporting and assembling the tower according to claim 16, wherein the method further comprises:
at the tower installation site, unfolding the platform main bodies (2) to the unfolded position before or after the respective tower sheets (1) are spliced and assembled together.

18. The method for transporting and assembling the tower according to claim 17, wherein the method further comprises:
fixedly connecting the unfolded adjacent platform main bodies (2) at their edges abutting against each other in a circumferential direction.

19. The method for transporting and assembling the tower according to claim 17, wherein the method further comprises:
after the platform main body (2) has been unfolded, providing a reinforcement member on a support member (20) to prevent the foldable platform (10) from folding.
